# EUROPEAN PATENT APPLICATION

(11) **EP 4 693 820 A1**
(43) Date of publication of application: **11.02.2026**
(21) Application number: 24832435.2
(22) Date of filing: 26.06.2024
(51) Int. Cl.: H02J 50/12, H02M 7/219, H03H 7/01, H02M 1/00

(54) **ELECTRONIC DEVICE FOR WIRELESSLY RECEIVING POWER, AND METHOD FOR OPERATING SAME**

(30) Priority: 28.06.2023 KR 20230083646; 12.10.2023 KR 20230136248
(71) Applicant: Samsung Electronics Co., Ltd., Suwon-si, Gyeonggi-do 16677 (KR)
(72) Inventor: SONG, Mingi, Suwon-si Gyeonggi-do 16677 (KR); LEE, Juhyang, Suwon-si Gyeonggi-do 16677 (KR); MIN, Geonhong, Suwon-si Gyeonggi-do 16677 (KR); PARK, Kyungmin, Suwon-si Gyeonggi-do 16677 (KR); O, Changhak, Suwon-si Gyeonggi-do 16677 (KR); YOON, Inkook, Suwon-si Gyeonggi-do 16677 (KR); CHA, Hwarang, Suwon-si Gyeonggi-do 16677 (KR)
(74) Representative: Gulde & Partner
(86) International application number: PCT/KR2024/008908
(87) International publication number: WO 2025/005657

(57) **Abstract**

A first electronic device configured to receive power wirelessly according to an embodiment may include a power receiving circuit including a plurality of capacitors, at least one coil, and at least one switch, a rectifier including a plurality of transistors, and a control circuit. The control circuit according to an embodiment may be configured to set the plurality of capacitors and the at least one coil to a first connection state through the at least one switch, based on a frequency specified by a second electronic device transmitting power wirelessly. The control circuit according to an embodiment may be configured to receive alternating current (AC) power wirelessly from the second electronic device through the power receiving circuit set to the first connection state. The control circuit according to an embodiment may be configured to control the plurality of transistors included in the rectifier to rectify the power received from the second electronic device. The control circuit according to an embodiment may be configured to identify a first voltage of power rectified to direct current (DC) through the rectifier. The control circuit according to an embodiment may be configured to set the plurality of capacitors and the at least one coil to a second connection state through the at least one switch to increase an impedance of the plurality of capacitors and/or change a resonant frequency of the power, based on identifying that the first voltage is greater than a first threshold. The control circuit according to an embodiment may be configured to control the plurality of transistors included in the rectifier to freewheel the power received from the second electronic device.

## Description

### [Technical Field]

The disclosure relates to an electronic device for wirelessly receiving power and a method of operating the same.

### [Background Art]

Along with the development of wireless charging technology, research has been conducted on methods of supplying power to various electronic devices from a single charging device and charging them. The wireless charging technology uses wireless power transmission and reception, which is, for example, a system allowing an electronic device to automatically charge its battery by simply placing the electronic device on a charging pad, rather than connecting the electronic device to a separate charging connector.

The wireless charging technology may include an electromagnetic induction scheme, a resonance scheme, and a radio frequency (RF)/microwave radiation scheme in which electrical energy is converted into microwaves, for transmission.

A wireless charging-based power transmission scheme refers to a method of transmitting power between a first coil of a transmitting end and a second coil of a receiving end. A magnetic field may be generated at the transmitting end, and current is induced or resonated according to a change in the magnetic field to generate energy at the receiving end.

In a wireless power transmission scheme using electromagnetic induction, which is a method of transmitting power using an electromagnetic field induced in a coil, a wireless power transmission device may generate an electromagnetic field by applying current to a transmission coil, and the generated electromagnetic field may form an induced electromotive force in a reception coil of a wireless power reception device, thereby wirelessly transmitting power.

### [Disclosure of Invention]

### [Solution to Problems]

A first electronic device configured to receive power wirelessly according to an embodiment includes a power receiving circuit including a plurality of capacitors, at least one coil, and at least one switch, a rectifier including a plurality of transistors, and a control circuit. The control circuit according to an embodiment is configured to: set the plurality of capacitors and the at least one coil to a first connection state through the at least one switch, based on a frequency specified by a second electronic device configured to transmit power wirelessly. The control circuit according to an embodiment is configured to receive alternating current (AC) power wirelessly from the second electronic device through the power receiving circuit set to the first connection state. The control circuit according to an embodiment is configured to control the plurality of transistors included in the rectifier to rectify the power received from the second electronic device. The control circuit according to an embodiment is configured to identify a first voltage of power rectified to direct current (DC) through the rectifier. The control circuit according to an embodiment is configured to set the plurality of capacitors and the at least one coil to a second connection state through the at least one switch to increase an impedance of the plurality of capacitors and/or change a resonant frequency of the power, based on identifying that the first voltage is greater than a first threshold. The control circuit according to an embodiment is configured to control the plurality of transistors included in the rectifier to freewheel the power received from the second electronic device.

A method of operating a first electronic device for receiving power wirelessly according to an embodiment includes receiving AC power wirelessly from a second electronic device through a power receiving circuit included in the first electronic device. A plurality of capacitors and at least one coil included in the power receiving circuit according to an embodiment are set to a first connection state corresponding to a frequency specified by the second electronic device through at least one switch. The method of operating the first electronic device for receiving power wirelessly according to an embodiment includes controlling a plurality of transistors included in a rectifier included in the first electronic device to rectify the power received from the second electronic device. The method of operating the first electronic device for receiving power wirelessly according to an embodiment includes identifying a first voltage of power rectified to DC through the rectifier included in the first electronic device. The method of operating the first electronic device for receiving power wirelessly according to an embodiment includes setting the plurality of capacitors and the at least one coil to a second connection state through the at least one switch to increase an impedance of the plurality of capacitors, based on identifying that the first voltage is greater than a first threshold. The method of operating the first electronic device for receiving power wirelessly according to an embodiment includes controlling the plurality of transistors included in the rectifier to freewheel the power received from the second electronic device.

A non-transitory computer-readable recording medium according to an embodiment stores instructions which, when executed, cause an electronic device to capable of performing operations including: receiving alternating current AC power wirelessly from a second electronic device through a power receiving circuit included in a first electronic device, wherein a plurality of capacitors and at least one coil included in the power receiving circuit are set to a first connection state corresponding to a frequency specified by the second electronic device through at least one switch, controlling a plurality of transistors included in a rectifier included in the first electronic device to rectify the power received from the second electronic device, identifying a first voltage of power rectified to DC through the rectifier included in the first electronic device, setting the plurality of capacitors and the at least one coil to a second connection state through the at least one switch to increase an impedance of the plurality of capacitors, based on identifying that the first voltage is greater than a first threshold, and controlling the plurality of transistors included in the rectifier to freewheel the power received from the second electronic device.

### [Brief Description of Drawings]

The above and other aspects, features and advantages of certain embodiments of the present disclosure will be more apparent from the following detailed description, taken in conjunction with the accompanying drawings, in which:
FIG. 1 is a block diagram illustrating an electronic device for wirelessly transmitting power and an electronic device for wirelessly receiving power according to various embodiments.
FIG. 2 is a block diagram illustrating a wireless power transmission device and a wireless power reception device according to various embodiments;
FIG. 3 is a graph for describing a method of freewheeling power received from a wireless power transmission device by a wireless power reception device according to an embodiment;
FIG. 4 is a circuit diagram for describing a method of freewheeling power received from a wireless power transmission device by a wireless power reception device according to an embodiment;
FIG. 5 is a graph illustrating a current conducted in a corresponding transistor during freewheeling in a wireless power reception device according to a comparative embodiment;
FIG. 6 is a flowchart illustrating a method of operating a first electronic device according to an embodiment;
FIG. 7 is a graph illustrating impedance changes according to equivalent capacitances of a first electronic device according to an embodiment;
FIGS. 8A and 8B are graphs illustrating a current conducted in a corresponding transistor during freewheeling in a first electronic device according to an embodiment;
FIG. 9 is a flowchart illustrating a method of reducing the magnitude of a current conducted in transistors during freewheeling by increasing an impedance in a first electronic device according to an embodiment;
FIG. 10 is a flowchart illustrating a method of reducing the magnitude of a current conducted in transistors during freewheeling by increasing an impedance in a first electronic device according to an embodiment;
FIG. 11 is a flowchart illustrating a method of reducing the magnitude of a current conducted in transistors during freewheeling by reducing coupling of coils in a first electronic device according to an embodiment; and
FIG. 12 is a block diagram illustrating an electronic device in a network environment according to various embodiments.

### [Mode for the Invention]

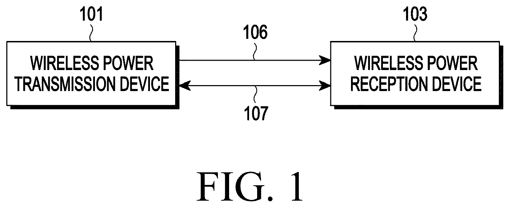

FIG. 1 is a block diagram illustrating an electronic device for wirelessly transmitting power (hereinafter, referred to as a wireless power transmission device) and an electronic device for wirelessly receiving power (hereinafter, referred to as a wireless power reception device) according to various embodiments.

Referring to FIG. 1, a wireless power transmission device 101 according to various embodiments may transmit power 106 wirelessly to a wireless power reception device 103. The wireless power transmission device 101 may receive information 107 from the wireless power reception device 103. In an example, the wireless power transmission device 101 may transmit the power 106 in an induction scheme. When the wireless power transmission device 101 operates in the induction scheme, the wireless power transmission device 101 may include, for example, at least one of a power source, a direct current (DC) to DC conversion circuit (e.g., a DC/DC converter), a DC to alternating current (AC) conversion circuit (e.g., an inverter), an amplification circuit, an impedance matching circuit, at least one capacitor, at least one coil, or a communication modulation circuit. The at least one capacitor may form a resonant circuit together with the at least one coil. In an embodiment, the wireless power transmission device 101 may be implemented in a manner defined by the Qi standard of the wireless power consortium (WPC). The wireless power transmission device 101 may include a coil capable of generating an inductive magnetic field, when a current flows through it in the induction scheme. The process of generating an inductive magnetic field in the wireless power transmission device 101 may be described as wirelessly transmitting the power 106 by the wireless power transmission device 101. Further, in a coil of the wireless power reception device 103, an induced electromotive force (or current, voltage, and/or power) may be generated by a magnetic field generated around it in a resonance or induction scheme. The process of generating an induced electromotive force through a coil may be described as wirelessly receiving the power 106 by the wireless power reception device 103.

In various embodiments, the wireless power transmission device 101 may perform communication with the wireless power reception device 103. For example, the wireless power transmission device 101 may perform communication with the wireless power reception device 103 in an in-band manner. The wireless power transmission device 101 may modulate data to be transmitted, for example, in a frequency shift keying (FSK) modulation scheme, and the wireless power reception device 103 may provide the information 107 by modulating the information in an amplitude shift keying (ASK) modulation scheme. The wireless power transmission device 101 may identify the information 107 provided by the wireless power reception device 103 based on the amplitude of a current and/or a voltage applied to a transmission coil. Although the wireless power reception device 103 is described as transmitting the information 107 directly to the wireless power transmission device 101 in FIG. 1, this is simply for ease of understanding, and those skilled in the art will understand that the wireless power reception device 103 controls on/off of at least one switch therein. An operation of performing modulation based on the ASK modulation scheme and/or the FSK modulation scheme may be understood as transmitting data (or a packet) according to an in-band communication scheme, and an operation of performing demodulation based on an ASK demodulation scheme and/or an FSK demodulation scheme may be understood as receiving data (or a packet) according to an in-band communication scheme.

As used herein, performing a specific operation by the wireless power transmission device 101 or the wireless power reception device 103 may refer to performing the specific operation by various hardware included in the wireless power transmission device 101 or the wireless power reception device 103, such as a controller (e.g., a micro controlling unit (MCU), a field programmable gate array (FPGA), an application specific integrated circuit (ASIC), a microprocessor, or an application processor (AP)). A processor, according to an embodiment of the disclosure may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions. Alternatively, performing a specific operation by the wireless power transmission device 101 or the wireless power reception device 103 may refer to a controller included in the wireless power transmission device 101 or the wireless power reception device 103 controlling other hardware to perform the specific operation. Alternatively, performing a specific operation by the wireless power transmission device 101 or the wireless power reception device 103 may refer to causing the controller or other hardware to perform the specific operation, upon execution of at least one instruction for performing the specific operation, which is stored in a storage circuit (e.g., memory) of the wireless power transmission device 101 or the wireless power reception device 103.

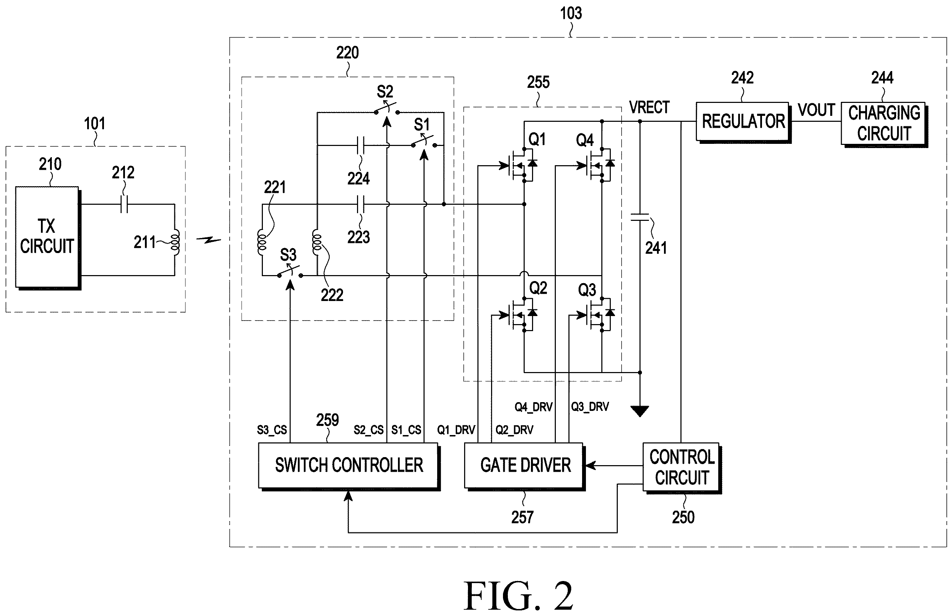

FIG. 2 is a block diagram illustrating a wireless power transmission device and a wireless power reception device according to an embodiment.

Referring to FIG. 2, according to an embodiment, the wireless power transmission device 101 may include a transmission (TX) circuit 210, a coil 211, and a capacitor 212.

According to an embodiment, the TX circuit 210 may provide power provided by a power source to the coil 211. According to an embodiment, the TX circuit 210 may include a power source (not shown), a DC/DC converter (not shown), and/or an inverter (not shown). For example, the power source may include at least one of an interface to connect to an external travel adapter (TA), a battery (not shown) of the wireless power transmission device 101, a charger (not shown), or a power management integrated circuit (PMIC) (not shown). According to an embodiment, power provided by the power source may be provided to the DC/DC converter. Although the power source may provide DC power to the DC/DC converter, the type of provided power is not limited. The DC/DC converter may convert the voltage of the received power and provide it to the inverter. The DC/DC converter may change the voltage of the received DC power and provide DC power with the changed voltage (or a drive voltage (VDD)) to the inverter. Although the DC/DC converter may perform, for example, buck conversion and/or boost conversion, those skilled in the art will understand that the type of the DC/DC converter is not limited. The inverter may output AC power using the drive voltage provided by the DC/DC converter. For example, the inverter may include a plurality of switches that may form a full bridge circuit, and the number of switches or the type of the bridge circuit is not limited.

According to an embodiment, the AC power generated by the TX circuit 210 may be applied to the coil 211. The capacitor 212 may be a series compensation capacitor of the coil 211. The coil 211 may form a magnetic field based on the applied AC power. A portion of the magnetic field (or magnetic flux) formed by the coil 211 may be applied to a first coil 221 and/or a second coil 222 of the wireless power reception device 103. As the magnetic field applied to the first coil 221 and/or a second coil 222 of the wireless power reception device 103 changes over time, an induced electromotive force (e.g., current, voltage, or power) may be generated in the first coil 221 and/or a second coil 222 of the wireless power reception device 103.

According to an embodiment, the TX circuit 210 may identify information provided by the wireless power reception device 103 through the coil 211. The TX circuit 210 may perform analog-to-digital conversion (ADC) on a signal received through the coil 211, for example. The TX circuit 210 may decode a digital value obtained as a result of the ADC and identify the information provided by the wireless power reception device 103 based on a decoding result. Although a decoding scheme may be based on, for example, the Qi standard, those skilled in the art will understand that the decoding scheme is not limited.

According to an embodiment, the wireless power reception device 103 may include at least one of a power receiving circuit 220, a rectification circuit 255, a control circuit 250, a gate driver 257, a switch controller 259, a capacitor 241, a regulator 242, and/or a charging circuit 244.

According to an embodiment, the power receiving circuit 220 may include a second coil 222, a first capacitor 223, and a second capacitor 224. According to an embodiment, the second coil 222, the first capacitor 223, and the second capacitor 224 may form an LC resonant circuit corresponding to a frequency specified by the wireless power transmission device 101. In this case, the power receiving circuit 220 may include at least one of a first switch S1 or a second switch S2. Depending on implementation, the power receiving circuit 220 may further include the first coil 221 and/or a third switch S3. Although the power receiving circuit 220 is shown in FIG. 2 as further including the first coil 221 and the third switch S3, this is for ease of description only, not limiting the technical ideas of the disclosure. However, for ease of description, the power receiving circuit 220 will be described below as including the first coil 221, the second coil 222, the first capacitor 223, the second capacitor 224, the first switch S1, the second switch S2, and the third switch S3. However, it will be understood that it may be within the understanding of those skilled in the art to modify the power receiving circuit 220 to include at least some of the above components.

According to an embodiment, the power receiving circuit 220 may include at least one of the first coil 221, the second coil 222, the first capacitor 223, or the second capacitor 224. According to an embodiment, at least one of the first coil 221, the second coil 222, the first capacitor 223, or the second capacitor 224 may form an LC resonant circuit corresponding to a frequency specified by the wireless power transmission device 101. The power receiving circuit 220 may include at least one of the first switch S1, the second switch S2, or the third switch S3.

According to an embodiment, the first capacitor 223 and the second capacitor 224 may be connected in parallel to each other. One end of each of the first capacitor 223 and the second capacitor 224 may be connected to the first coil 221 and the second coil 222, and the other end of each of the first capacitor 223 and the second capacitor 224 may be connected to one end of the rectification circuit 255. The first switch S1 may be connected in series to the first capacitor 223. The second switch S2 may be connected in parallel to each of the first capacitor 223 and the second capacitor 224.

According to an embodiment, the first coil 221 and the second coil 222 may be connected in parallel to each other. The third switch S3 may be disposed between the first coil 221 and the second coil 222.

According to an embodiment, the rectification circuit (or rectifier) 255 may rectify power received from a wireless charging device through a plurality of transistors Q1, Q2, Q3, and Q4 controlled by the control circuit 250. The rectification circuit 255 may rectify (or convert) AC power received from the wireless charging device to DC power, and output or provide the rectified DC power to the regulator 242.

According to an embodiment, the rectification circuit 255 may include the plurality of transistors Q1, Q2, Q3, and Q4 that may operate as a full-bridge circuit or a voltage doubler circuit. For example, each of the plurality of transistors Q1, Q2, Q3, and Q4 may be implemented as a metal oxide semiconductor field effect transistor (MOSFET).

According to an embodiment, one end of the power receiving circuit 220 may be connected to a connection point between the transistors Q1 and Q2, and the other end of the power receiving circuit 220 may be connected to a connection point between the transistors Q3 and Q4. For example, one end of the first transistor Q1 and one end of the fourth transistor Q4 may be connected to the regulator 242, one end of the second transistor Q2 may be connected to the other end of the first transistor Q1, and one end of the third transistor Q3 may be connected to the other end of the fourth transistor Q4. The other end of the second transistor Q2 and the other end of the third transistor Q3 may be connected to a ground. The other end of the first transistor Q1 and the one end of the second transistor Q2 may be connected to one end of the first coil 221 (and the second coil 222), and the one end of the third transistor Q3 and the other end of the fourth transistor Q4 may be connected to the other end of the first coil 221 (and the second coil 222). The rectification circuit 255 may convert AC power received through the first coil 221 and/or the second coil 222 to DC power. The control circuit 250 may control on/off states of the plurality of transistors Q1, Q2, Q3, and Q4 to allow AC power to be converted to DC power. The control circuit 250 may rectify a power signal (e.g., an AC signal or AC power) received from the first coil 221 and/or the second coil 222 and supply the rectified power signal (e.g., a DC signal or DC power) to the regulator 242.

According to an embodiment, the control circuit 250 may identify a first voltage VRECT of power output from the rectification circuit 255. For example, the first voltage VRECT may be a voltage applied to the capacitor 241. The control circuit 250 may identify the first voltage VRECT based on a voltage across both ends of the regulator 242. For example, the wireless power reception device 103 may further include a sensing circuit (not shown) to sense the first voltage VRECT. For example, the control circuit 250 may include a resistor in the sensing circuit and identify the first voltage VRECT by identifying a voltage value applied to the resistor.

According to an embodiment, when the voltage of AC power received through the first coil 221 and/or the second coil 222 (or the first voltage VRECT of the power rectified through the rectification circuit 255) is higher than a predetermined threshold, the control circuit 250 may control the on/off states of the plurality of transistors Q1, Q2, Q3, and Q4 to consume corresponding power. For example, when the voltage of the AC power received through the first coil 221 and/or the second coil 222 (or the first voltage VRECT of the power rectified through the rectification circuit 255) is higher than the predetermined threshold, the control circuit 250 may control the plurality of transistors Q1, Q2, Q3, and Q4 to freewheel the corresponding power. For example, the control circuit 220 may freewheel the power received through the first coil 221 and/or the second coil 222 by shorting the transistors Q2 and Q3 disposed on a low side to the ground (e.g., by controlling the transistors Q2 and Q3 to the on state). The control circuit 220 may control the transistors Q1 and Q4 disposed on a high side to the off state during the power freewheeling. During the power freewheeling, the rectification operation of the rectification circuit 255 may be discontinued. Once the rectification operation is discontinued, charge stored in the capacitor 241 may be discharged, which may slowly reduce the output voltage of the rectification circuit 255. For example, the low side may refer to a lower part of the plurality of transistors Q1, Q2, Q3, and Q4 shown in the drawing. For example, the transistors disposed on the low side may be Q2 and Q3. For example, the high side may refer to a higher part of the plurality of transistors Q1, Q2, Q3, and Q4 shown in the drawing. For example, the transistors disposed on the high side may Q1 and Q4.

According to an embodiment, the control circuit 250 may control the gate driver 257 to provide control signals Q1_DRV, Q2_DRV, Q3_DRV, and Q4_DRV to the plurality of transistors Q1, Q2, Q3, and Q4, for generating the AC power described above. For example, the gate driver 257 may provide the control signals Q1_DRV, Q2_DRV, Q3_DRV, and Q4_DRV to the plurality of transistors Q1, Q2, Q3, and Q4 under the control of the control circuit 250. Not only outputting a control signal, but also refraining from outputting a control signal (e.g., stopping or suppressing an output) may be referred to as control of the control circuit 250.

According to an embodiment, the plurality of transistors Q1, Q2, Q3, and Q4 may be implemented as switch circuits. For example, each of the plurality of transistors Q1, Q2, Q3, and Q4 may be implemented as a switch circuit (e.g., a full-bridge circuit or a voltage doubler) that may be turned on/off under the control of the control circuit 255 and thus perform a specific function. The number or type of transistors shown in FIG. 2 is merely an example, to which embodiments of the disclosure may not be limited.

According to an embodiment, the capacitor 241 and the regulator 242 may be connected to the rectification circuit 255. One end of the capacitor 241 may be grounded. Charge corresponding to a current output through the rectification circuit 255 may be stored in the capacitor 241. The regulator 242 may perform conversion (e.g., buck conversion and/or boost conversion) and/or regulation on the voltage of rectified power output from the rectification circuit 255.

According to an embodiment, the charging circuit (or charger) 244 may charge a battery (not shown) with the power converted and/or regulated by the regulator 242. According to various embodiments, the charging circuit 244 may control a voltage and/or current with which the battery is charged according to a charging mode (e.g., constant current (CC) mode, constant voltage (CV) mode, or quick charging mode) of the battery. Depending on implementation, a PMIC (not shown) may be connected to the regulator 242, in place of the charging circuit 244.

According to an embodiment, the control circuit 250 may adjust connection states of the plurality of coils 221 and 222 and the plurality of capacitors 223 and 224 included in the power receiving circuit 220 through the plurality of switches S1, S2, and S3 included in the power receiving circuit 220. Depending on implementation, the control circuit 250 may adjust connection states of the second coil 222 and the plurality of capacitors 223 and 224 included in the power receiving circuit 220 through at least one switch S1 and/or S2 included in the power receiving circuit 220. For example, the control circuit 250 may control on/off of the plurality of switches S1, S2, and S3 through the switch controller 259. For example, the switch controller 259 may provide control signals S1_CS, S2_CS, and S3_CS to the plurality of switches S1, S2, and S3 under the control of the control circuit 250. Depending on implementation, the control circuit 250 may control the on/off of the plurality of switches S1, S2, and S3 without the switch controller 259. Not only outputting a control signal, but also refraining from outputting a control signal may be referred to as control of the control circuit 250.

According to an embodiment, each of the plurality of switches S1, S2, and S3 may be turned on/off under the control of the control circuit 250 (or the switch controller 259). Accordingly, an equivalent capacitance value of the plurality of capacitors 223 and 224 may be changed. Additionally, a coupling value of the plurality of coils 221 and 222 may be changed.

According to an embodiment, the control circuit 250 may control the switch S1 such that power received by the plurality of capacitors 223 and 224 is reduced. In an embodiment, the switch S3 may be controlled such that power received by the plurality of coils 221 and 222 is reduced. The control circuit 250 may control at least one switch such that an impedance is increased and/or a coupling value is decreased, thereby reducing wirelessly received power. The control circuit 250 may control the rectification circuit 255 to freewheel power received from the wireless power transmission device 101.

According to an embodiment, when identifying that the first voltage VRECT of power rectified through the rectification circuit 255 is higher than a predetermined first threshold, the control circuit 250 may adjust the connection states of the plurality of capacitors 223 and 224 through the plurality of switches S1 and S2 such that the impedance of the plurality of capacitors 223 and 224 is increased. Further, when identifying that the first voltage VRECT of the power rectified through the rectification circuit 255 is higher than the predetermined first threshold, the control circuit 250 may adjust the connection states of the plurality of coils 221 and 222 through the third switch S3 such that the coupling of the plurality of coils 221 and 222 is reduced. For example, the first threshold may be determined based on a threshold voltage allowed for the wireless power reception device 103. For example, when the threshold voltage allowed for the wireless power reception device 103 is 20V, the first threshold may be determined to be 18V to 20V.

According to an embodiment, the control circuit 250 may control at least one switch S1, S2, or S3 such that the impedance of the plurality of capacitors 223 and 224 is increased. The control circuit 250 may freewheel power received from the wireless power transmission device 101 based on the at least one switch S1, S2, or S3 being controlled.

According to an embodiment, the control circuit 250 may freewheel the power received from the wireless power transmission device 101 after controlling the plurality of switches S1, S2, and S3 such that the impedance of the plurality of capacitors 223 and 224 is increased and/or the coupling of the plurality of coils 221 and 222 is reduced. Alternatively, the control circuit 250 may control the plurality of switches S1, S2, and S3 such that the impedance of the plurality of capacitors 223 and 224 is increased and/or the coupling of the plurality of coils 221 and 222 is reduced, after freewheeling the power received from the wireless power transmission device 101.

According to an embodiment, when identifying that the first voltage VRECT of the power rectified through the rectification circuit 255 is lower than a predetermined second threshold (e.g., a threshold less than the first threshold) after freewheeling the power received from the wireless power transmission device 101, the control circuit 250 may control the plurality of switches S1 and S2 to change the connection states of the plurality of capacitors 223 and 224 and the plurality of coils 221 and 222 to the previous connection states. For example, the second threshold may be determined based on the threshold voltage allowed for the wireless power reception device 103 and the first threshold. For example, when the threshold voltage allowed for the wireless power reception device 103 is 20V and the first threshold is 18V, the second threshold may be determined to be 15V to 16V.

The number, type, and arrangement of the switches S1, S2, and S3 shown in FIG. 2 are merely examples, to which embodiments of the disclosure may not be limited. Further, the numbers, types, and arrangements of the capacitors 223 and 224 and the coils 221 and 222 shown in FIG. 2 are merely examples, to which embodiments of the disclosure may not be limited.

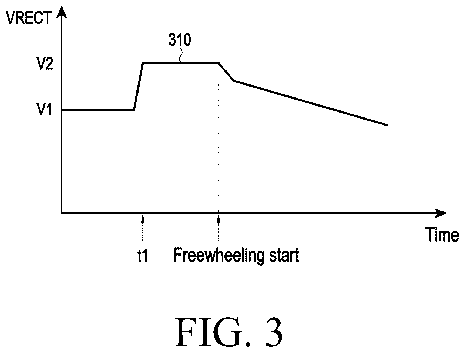

FIG. 3 is a graph for describing a method of freewheeling power received from a wireless power transmission device by a wireless power reception device according to an embodiment.

Referring to FIG. 3, the wireless power reception device 103 (hereinafter, referred to as a first electronic device) may receive power from the wireless power transmission device 101 (hereinafter, referred to as a second electronic device) according to an embodiment. For example, a graph 310 of FIG. 3 may represent the voltage of power received by the first electronic device 103. For example, the first electronic device 103 may output power having a first voltage value V1 through the rectification circuit 255 based on the power received from the wireless power transmission device 101.

According to an embodiment, the first electronic device 103 may receive power with a larger magnitude than before at a first time point t1, as shown in the graph 310. For example, when the second electronic device 101 malfunctions, the first electronic device 103 may receive power with a larger magnitude than before. For example, when the distance between the first electronic device 103 and the second electronic device 101 suddenly becomes smaller, the first electronic device 103 may receive power with a larger magnitude than before. Alternatively, in the case where the first electronic device 103 is a rollable electronic device or a foldable electronic device, when the state of the first electronic device 103 changes abruptly (e.g., from a folded state to an unfolded state or from the unfolded state to the folded state), the first electronic device 103 may receive power with a larger magnitude than before. For example, the first electronic device 103 may output power having a second voltage value V2 greater than the first voltage value V1 through the rectification circuit 255. It may take a certain amount of time for the first electronic device 103 to transmit a control signal to the second electronic device 101 and thus for the second electronic device 101 to reduce the magnitude of the transmitted power to a normal magnitude. When the second voltage value V2 is greater than a threshold voltage allowed for the first electronic device 103, the first electronic device 103 may be damaged. That is, the first electronic device 103 may take a certain amount of time to reduce the magnitude of the received power to or below the threshold voltage, and components included in the first electronic device 103 may be damaged during the reduction of the magnitude of power. Therefore, before the second electronic device 101 reduces the magnitude of the transmitted power, the first electronic device 103 may start a freewheeling operation to internally consume the power with the large magnitude. When the freewheeling operation is performed, the rectification operation of the rectification circuit 255 may be discontinued. Accordingly, a voltage applied to the regulator 242 may gradually decrease, as shown in the graph 310.

However, while the first electronic device 103 is performing the freewheeling operation, a current with a large magnitude may be conducted in the transistors Q2 and Q3 included in the rectification circuit. Therefore, there is a possibility that the transistors may be damaged due to the current with the large magnitude. When the first electronic device 103 is equipped with transistors in which a current with a large magnitude may be conducted, the first electronic device 103 may suffer from increased production cost and decreased space utilization.

In an embodiment, when the second voltage value V2 is greater than a specified first threshold, the first electronic device 103 may control the switch S1, S2, and/or S3 such that an impedance is increased and/or a coupling value is decreased to reduce received power. In an embodiment, when the second voltage value V2 is greater than the specified first threshold, the first electronic device 103 may start the freewheeling operation to internally consume the power. To prevent and/or reduce damage, the first electronic device 103 may control the switches included in the power receiving circuit 220 and/or the plurality of transistors Q1, Q2, Q3, and Q4 included in the rectification circuit 255 based on the first threshold, which is a reference equal to or less than the allowed threshold voltage.

Through the above-described method, the first electronic device 103 according to an embodiment may prevent and/or reduce damage to corresponding transistors during the freewheeling operation. Furthermore, the first electronic device 103 according to an embodiment may reduce the magnitude of the received power, even if it is not equipped with transistors in which a current with a large magnitude may be conducted. Therefore, the first electronic device 103 may be more efficient in terms of production cost and space utilization.

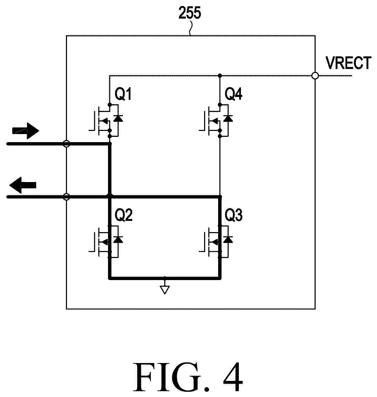

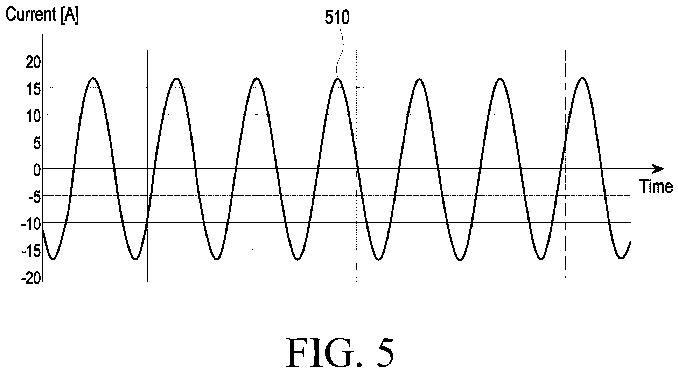

FIG. 4 is a circuit diagram for describing a method of freewheeling power received from a wireless power transmission device by a wireless power reception device according to an embodiment. FIG. 5 is a graph illustrating a current conducted in a corresponding transistor during freewheeling in a wireless power reception device according to a comparative embodiment.

Referring to FIG. 4, the first electronic device 103 may perform a free-wheeling operation to consume power received from the second electronic device 101. The first electronic device 103 may control the on/off states of the plurality of transistors Q1, Q2, Q3, and Q4 included in the rectification circuit 255 to perform the free-wheeling operation. For example, the transistors Q2 and Q3 disposed on the low side may be controlled to the on state. Accordingly, the transistors Q2 and Q3 disposed on the low side may be shorted to the ground. The transistors Q1 and Q4 disposed on the high side may be controlled to the off state. During the power freewheeling, the rectification operation of the rectification circuit 255 may be discontinued. The rectification circuit 255 may not output rectified power during the freewheeling. Further, while the first electronic device 103 is freewheeling power received from the second electronic device 101, it may consume the power internally.

Referring to FIG. 5, according to a comparative embodiment, during freewheeling of power received from the second electronic device 101, a current 510 corresponding to the power may be applied to the transistors Q2 and Q3 disposed on the low side. For example, a current value corresponding to a peak of the current 510 may exceed a current value allowed for the transistors Q2 and Q3 disposed on the low side. For example, the current value corresponding to the peak of the current 510 may exceed 15A. As a result, the transistors Q2 and Q3 in which the current is conducted may be damaged during the freewheeling. Therefore, during the freewheeling of the power received from the second electronic device 101, the magnitude of the conducted current should be reduced to prevent and/or reduce damage to the transistors Q2 and Q3.

The first electronic device 103 according to an embodiment may change the connection states of the plurality of capacitors 223 and 224 and the plurality of coils 221 and 222 included in the power receiving circuit 220 before performing the freewheeling (or immediately after performing the freewheeling) so as to reduce the magnitude of the current conducted in the transistors Q2 and Q3.

According to an embodiment, the first electronic device 103 may increase the impedance of the plurality of capacitors 223 and 224 by controlling on/off of the plurality of switches S1, S2, and S3 included in the power receiving circuit 220. This may reduce the magnitude of the current conducted in the transistors Q2 and Q3 during the freewheeling.

According to an embodiment, the first electronic device 103 may reduce coupling of the plurality of coils 221 and 222 by controlling on/off of the plurality of switches S1, S2, and S3 included in the power receiving circuit 220. This may reduce the magnitude of the current conducted in the transistors Q2 and Q3 during the freewheeling.

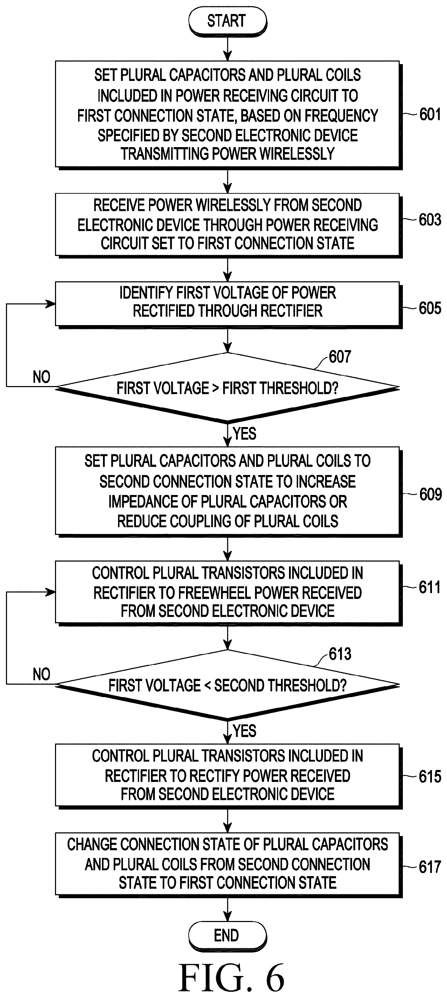

FIG. 6 is a flowchart illustrating a method of operating a first electronic device that receives power wirelessly according to an embodiment.

Referring to FIG. 6, according to an embodiment, the first electronic device (e.g., the wireless power reception device 103 of FIG. 2) may set a plurality of capacitors (e.g., the plurality of capacitors 223 and 224 in FIG. 2) and a plurality of coils (e.g., the plurality of coils 221 and 222 in FIG. 2) included in a power receiving circuit (e.g., the power receiving circuit 220 in FIG. 2) to a first connection state based on a frequency specified by a second electronic device (e.g., the wireless power transmission device 101 in FIG. 2) that transmits power wirelessly, in operation 601. For example, the first connection state may correspond to a resonance point of the specified frequency.

According to an embodiment, in operation 603, the first electronic device 103 may wirelessly receive power from the second electronic device 101 through the power receiving circuit 220 set to the first connection state.

According to an embodiment, in operation 605, the first electronic device 103 may identify a first voltage of power rectified through a rectifier (e.g., the rectification circuit 255 in FIG. 2). For example, the control circuit 250 may identify the first voltage VRECT of power output from the rectification circuit 255. In operation 607, the first electronic device 103 may identify whether the first voltage is greater than a first threshold. For example, the first threshold may be determined based on a maximum rectified voltage allowed for the first electronic device 103. For example, the first threshold may represent a voltage value equal to or slightly less than the maximum rectified voltage allowed for the first electronic device 103.

According to an embodiment, when identifying that the first voltage is less than or equal to the first threshold (no in operation 607), the first electronic device 103 may periodically or continuously identify the first voltage of the power rectified through the rectifier (e.g., the rectification circuit 255 in FIG. 2).

According to an embodiment, when identifying that the first voltage is greater than the first threshold (yes in operation 607), the first electronic device 103 may set the plurality of capacitors 223 and 224 and the plurality of coils 221 and 222 to a second connection state through the plurality of switches S1, S2, and S3 such that the impedance of the plurality of capacitors 223 and 224 is increased and/or the coupling of the plurality of coils 221 and 222 is decreased, in operation 609. For example, the second connection state may be different from the first connection state.

According to an embodiment, in operation 611, the first electronic device 103 may control the plurality of transistors Q1, Q2, Q3, and Q4 included in the rectifier 255 to freewheel the power received from the second electronic device 101. At this time, the rectification operation of the rectifier 255 may be discontinued.

According to another embodiment, the order of operations 609 and 611 may be changed. For example, operation 611 may be performed after operation 607. Operation 609 may be performed after operation 611. Depending on implementation, operation 609 and operation 611 may be performed simultaneously.

According to an embodiment, in operation 613, the first electronic device 103 may identify whether the first voltage is less than a second threshold while performing the freewheeling. For example, as the freewheeling is performed, the magnitude of the first voltage of the power output from the rectification circuit 255 may be progressively reduced. The first electronic device 103 may identify whether the reduced first voltage is less than the second threshold. The second threshold may represent a voltage value based on which how long to perform the freewheeling operation is determined. For example, the second threshold may be less than the first threshold.

According to an embodiment, when identifying that the first voltage is greater than or equal to the second threshold (no in operation 613), the first electronic device 103 may control the plurality of transistors Q1, Q2, Q3, and Q4 included in the rectifier 255 to freewheel the power received from the second electronic device 101.

According to an embodiment, when identifying that the first voltage is less than the second threshold (yes in operation 613), the first electronic device 103 may rectify the power received from the second electronic device 101 by controlling the plurality of transistors Q1, Q2, Q4, and Q4 included in the rectifier 255, in operation 615. At this time, the freewheeling operation may be terminated.

According to an embodiment, in operation 617, the first electronic device 103 may change the connection state of the plurality of capacitors 223 and 224 and the plurality of coils 221 and 222 from the second connection state to the previous first connection state. Then, the first electronic device 103 may wirelessly receive power from the second electronic device 101 through the power receiving circuit 220 set to the first connection state.

Depending on implementation, the order of the operations described with reference to FIG. 6 may be changed, or two or more operations may be performed in parallel. According to another embodiment, the order of operations 615 and 617 may be changed. For example, operation 617 may be performed after operation 613. Operation 615 may be performed after operation 617. Depending on implementation, operation 615 and operation 617 may be performed simultaneously.

Through the above-described method, the first electronic device 103 may reduce the magnitude of a current applied to the transistors Q2 and Q3 while performing the freewheeling operation. Furthermore, the first electronic device 103 may prevent and/or reduce damage in the event that power received from the second electronic device 101 suddenly increases.

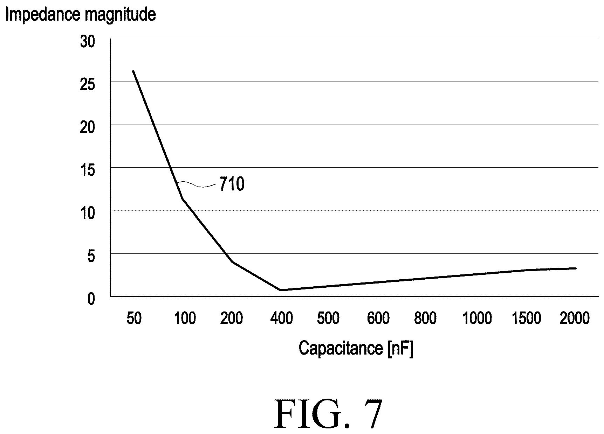

FIG. 7 is a graph illustrating impedance changes according to equivalent capacitances in a first electronic device according to an embodiment.

Referring to FIG. 7, a graph 710 may represent the magnitude of an impedance of the first electronic device 103 (e.g., the magnitude of an impedance in an equivalent circuit of the first electronic device 103 in FIG. 2) according to an equivalent capacitance of the first electronic device 103, when the first electronic device 103 and the second electronic device 101 are in a specific state. For example, when the equivalent capacitance of the first electronic device 103 is less than 400nF, the magnitude of the impedance may be inversely proportional to the equivalent capacitance. For example, when the equivalent capacitance is 400nF, the first electronic device 103 may change its equivalent capacitance by controlling on/off of the first switch S1 and/or the second switch S2. For example, when the equivalent capacitance of the first electronic device 103 is changed from 500nF to 200nF by opening the first switch S1, the magnitude of the impedance of the first electronic device 103 may increase. Alternatively, when the equivalent capacitance of the first electronic device 103 is changed from 500nF to 0nF (or approaches 0nF) by closing the second switch S2, the magnitude of the impedance of the first electronic device 103 may increase further. When the magnitude of the impedance of the first electronic device 103 increases, the magnitude of a current conducted in the transistors Q2 and Q3 may decrease according to the freewheeling.

According to the method described above, the first electronic device 201 may change the connection state of the plurality of capacitors 223 and 224 included in the power receiving circuit 220 such that the impedance is increased. Increasing the magnitude of the impedance by opening the first switch S1 or closing the second switch S2 as described above is merely an example, to which the method of changing the connection state of a switch to increase the magnitude of an impedance may not be limited. Depending on implementation, the first electronic device 103 may increase the magnitude of its impedance by closing the opened first switch S1 or opening the closed second switch S2.

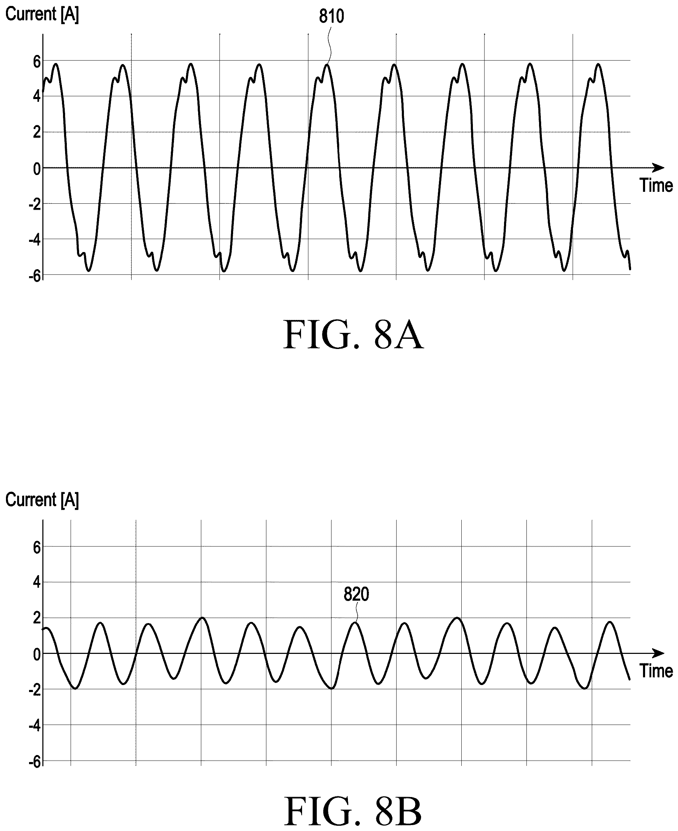

FIGS. 8A and 8B are graphs illustrating a current applied to a corresponding transistor during freewheeling in a first electronic device according to an embodiment.

Referring to FIGS. 8A and 8B, according to an embodiment, the first electronic device 103 may increase its impedance by controlling on/off of the first switch S1 and/or the second switch S2. By doing so, the first electronic device 103 may reduce the magnitude of a current conducted in the transistors Q2 and Q3, when performing the freewheeling operation.

Referring to FIG. 8A, according to an embodiment, the first electronic device 103 may reduce its equivalent capacitance from 500nF to 200nF by opening the first switch S1 included in the power receiving circuit 220. Compared to the peak of the current 510 in FIG. 5, the peak of a current 810 conducted in the transistors Q2 and Q3 may be reduced to about 6A during the freewheeling.

Referring to FIG. 8B, according to an embodiment, the first electronic device 103 may reduce its equivalent capacitance from 500nF to 0nF by closing the second switch S2 included in the power receiving circuit 220. Compared to the peak of the current 510 in FIG. 5, the peak of a current 820 conducted in the transistors Q2 and Q3 may be reduced to about 2A during the freewheeling.

According to the method described above, the first electronic device 201 may prevent and/or reduce damage to the transistors Q2 and Q3 during freewheeling by changing the connection state of the plurality of capacitors 223 and 224 included in the power receiving circuit 220.

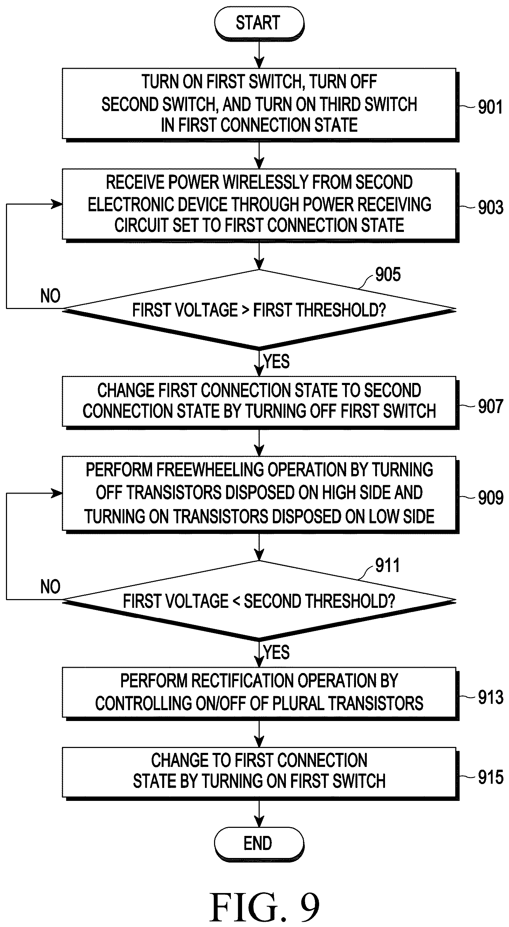

FIG. 9 is a flowchart illustrating a method of reducing the magnitude of a current conducted in transistors by increasing an impedance during freewheeling in a first electronic device according to an embodiment.

Referring to FIG. 9, according to an embodiment, in operation 901, the first electronic device 103 may control the first switch S1 included in the power receiving circuit 220 to the on state, the second switch S2 to the off state, and the third switch S3 to the on state in a first connection state of the plurality of capacitors 223 and 224 and the plurality of coils 221 and 222 included in the power receiving circuit 220. For example, the first connection state may correspond to a resonance point of a first frequency (e.g., 360kHz) specified by the second electronic device 101.

According to an embodiment, in operation 903, the first electronic device 103 may wirelessly receive power from the second electronic device 101 through the power receiving circuit 220 set to the first connection state.

According to an embodiment, in operation 905, it may be identified whether the first voltage VRECT applied to the regulator 242 is greater than a first threshold.

According to an embodiment, when identifying that the first voltage VRECT applied to the regulator 242 is less than or equal to the first threshold (no in operation 905), the first electronic device 103 may wirelessly receive power from the second electronic device 101 through the power receiving circuit 220 set to the first connection state, and identify periodically or in real time whether the first voltage VRECT applied to the regulator 242 is greater than the first threshold.

According to an embodiment, when identifying that the first voltage VRECT applied to the regulator 242 is greater than the first threshold (yes in operation 905), in operation 907, the first electronic device 103 may change the first connection state of the plurality of capacitors 223 and 224 and the plurality of coils 221 and 222 included in the power receiving circuit 220 to a second connection state by turning off the first switch S1. That is, the first electronic device 103 may control the first switch S1 to be in off state, in the second connection state. Based on turning off the first switch S1, the equivalent capacitance of the power receiving circuit 220 may decrease. As the equivalent capacitance of the power receiving circuit 220 decreases, the impedance of the power receiving circuit 220 may increase. Controlling the first switch S1 to the off state so that the resonant frequency of the first electronic device 103 deviates further from the resonance point of the first frequency as described above is merely an example, to which the method of changing the connection state of a switch such that the resonant frequency of the first electronic device 103 deviates further from the resonance point of the first frequency may not be limited. Depending on implementation, the first electronic device 103 may change the resonant frequency of the first electronic device 103 by controlling the first switch S1 from the off state to the on state.

According to an embodiment, in operation 909, the first electronic device 103 may perform a freewheeling operation by turning off the transistors Q1 and Q4 disposed on the high side and turning on the transistors Q2 and Q3 disposed on the low side among the plurality of transistors Q1, Q2, Q3, and Q4 included in the rectification circuit 255. As the freewheeling operation is performed, the first electronic device 103 may consume power received from the second electronic device 101. As the impedance of the first electronic device 103 increases, a current with a magnitude less than that of an allowed current may be conducted in the transistors Q2 and Q3 disposed on the low side.

According to an embodiment, in operation 911, the first electronic device 103 may identify whether the first voltage VRECT applied to the regulator 242 is less than a second threshold, after performing the freewheeling operation. For example, the first electronic device 103 may identify periodically or in real time whether the first voltage VRECT applied to the regulator 242 is less than the second threshold, after performing the freewheeling operation.

According to an embodiment, when identifying that the first voltage VRECT is less than the second threshold (yes in operation 911), the first electronic device 103 may perform a rectification operation on power received from the second electronic device 101 by controlling on/off of the plurality of transistors Q1, Q2, Q3, and Q4 in operation 913. For example, the first electronic device 103 may turn on the first transistor Q1 and the third transistor Q3 and turn off the second transistor Q2 and the fourth transistor Q4 during a first period. The first electronic device 103 may turn off the first transistor Q1 and the third transistor Q3 and turn on the second transistor Q2 and the fourth transistor Q4 during a second period following the first period. The first electronic device 103 may rectify the power received from the second electronic device 101 by alternately repeating the above operations.

According to an embodiment, in operation 915, the first electronic device 103 may reset (or change) the plurality of capacitors 223 and 224 and the plurality of coils 221 and 222 to the previous first connection state by turning on the first switch S1. For example, the first electronic device 103 may control the first switch S1 back to the on state. Thereafter, the first electronic device 103 may wirelessly receive power from the second electronic device 101 through the power receiving circuit 220 set to the first connection state.

Depending on implementation, the order of the operations described with reference to FIG. 9 may be changed, or two or more operations may be performed in parallel.

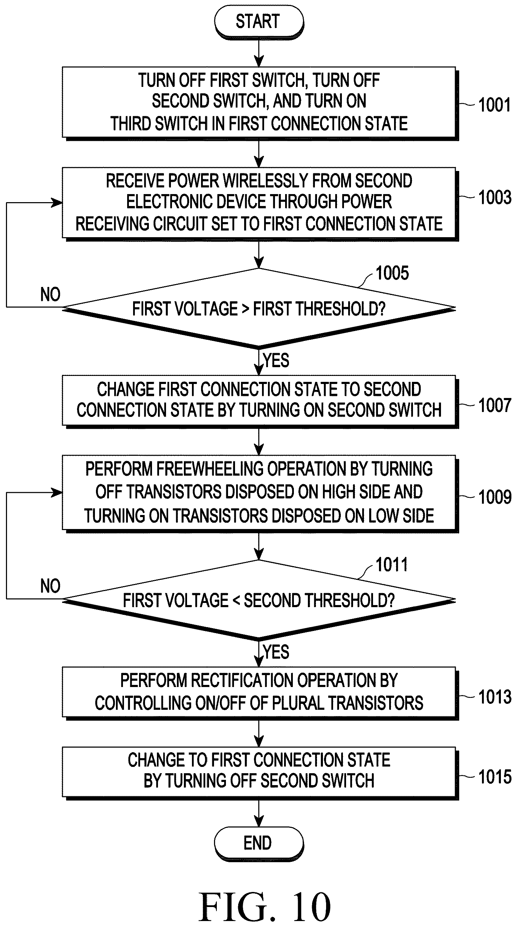

FIG. 10 is a flowchart illustrating a method of reducing the magnitude of a current conducted in transistors during freewheeling by increasing an impedance in a first electronic device according to an embodiment.

Referring to FIG. 10, according to an embodiment, the first electronic device 103 may control the first switch S1 included in the power receiving circuit 220 to the off state, the second switch S2 to the off state, and the third switch S3 to the on state in a first connection state of the plurality of capacitors 223 and 224 and the plurality of coils 221 and 222 included in the power receiving circuit 220, in operation 1001. For example, the first connection state may correspond to a resonance point of a second frequency (e.g., 127kHz) specified by the second electronic device 101.

According to an embodiment, in operation 1003, the first electronic device 103 may wirelessly receive power from the second electronic device 101 through the power receiving circuit 220 set to the first connection state.

According to an embodiment, in operation 1005, it may be identified whether the first voltage VRECT applied to the regulator 242 is greater than a first threshold.

According to an embodiment, when identifying that the first voltage VRECT applied to the regulator 242 is less than or equal to the first threshold (no in operation 1005), the first electronic device 103 may wirelessly receive power from the second electronic device 101 through the power receiving circuit 220 set to the first connection state, and identify periodically or in real time whether the first voltage VRECT applied to the regulator 242 is greater than the first threshold.

According to an embodiment, when identifying that the first voltage VRECT applied to the regulator 242 is greater than the first threshold (yes in operation 1005), in operation 1007, the first electronic device 103 may change the plurality of capacitors 223 and 224 and the plurality of coils 221 and 222 included in the power receiving circuit 220 from the first connection state to a second connection state by turning on the second switch S2. That is, the first electronic device 103 may control the second switch S2 to be in on state, in the second connection state. Based on turning on the second switch S2, the equivalent capacitance of the power receiving circuit 220 may decrease (e.g., to 0nF). As the equivalent capacitance of the power receiving circuit 220 decreases, the impedance of the power receiving circuit 220 may increase significantly.

According to an embodiment, in operation 1009, the first electronic device 103 may perform a free-wheeling operation by turning off the transistors Q1 and Q4 disposed on the high side and turning on the transistors Q2 and Q3 disposed on the low side among the plurality of transistors Q1, Q2, Q3, and Q4 included in the rectification circuit 255. As the freewheeling operation is performed, the first electronic device 103 may consume power received from the second electronic device 101. At this time, as the impedance of the first electronic device 103 increases greatly, a current with a magnitude less than an allowed current may be conducted in the transistors Q2 and Q3 disposed on the low side.

According to an embodiment, in operation 1011, the first electronic device 103 may identify whether the first voltage VRECT applied to the regulator 242 is less than a second threshold, after performing the free-wheeling operation. For example, the first electronic device 103 may identify periodically or in real time whether the first voltage VRECT applied to the regulator 242 is less than the second threshold, after performing the free-wheeling operation.

According to an embodiment, when identifying that the first voltage VRECT is less than the second threshold (yes in operation 1011), the first electronic device 103 may perform a rectification operation on the power received from the second electronic device 101 by controlling on/off of the plurality of transistors Q1, Q2, Q3, and Q4, in operation 1013.

According to an embodiment, in operation 1015, the first electronic device 103 may reset (or change) the plurality of capacitors 223 and 224 and the plurality of coils 221 and 222 to the previous first connection state by turning off the second switch S2. For example, the first electronic device 103 may control the second switch S2 back to the off state. The first electronic device 103 may then wirelessly receive power from the second electronic device 101 through the power receiving circuit 220 set to the first connection state.

Depending on implementation, the order of the operations described with reference to FIG. 10 may be changed, or two or more operations may be performed in parallel.

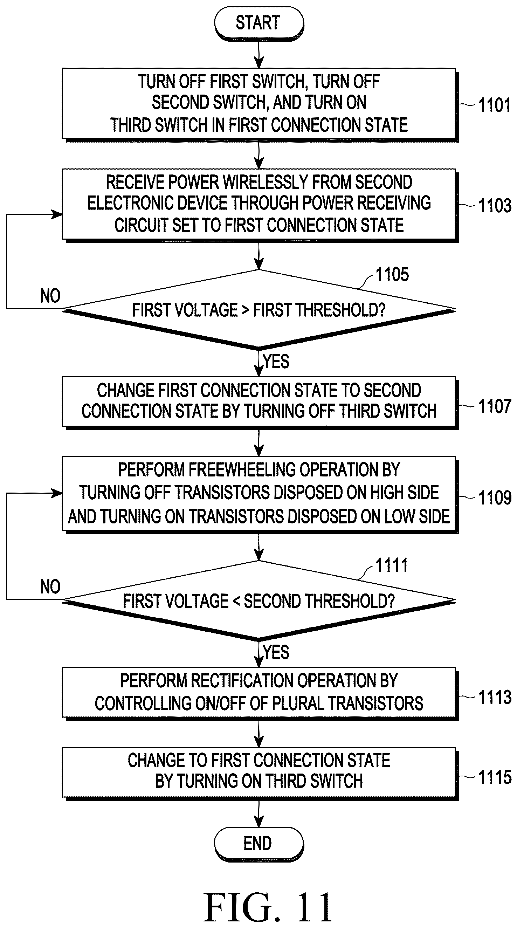

FIG. 11 is a flowchart illustrating a method of reducing the magnitude of a current conducted in transistors during freewheeling by reducing coupling of coils in a first electronic device according to an embodiment.

Referring to FIG. 11, according to an embodiment, the first electronic device 103 may control the first switch S1 included in the power receiving circuit 220 to the off state, the second switch S2 to the off state, and the third switch S3 to the on state in a first connection state of the plurality of capacitors 223 and 224 and the plurality of coils 221 and 222 included in the power receiving circuit 220, in operation 1001. For example, the first connection state may correspond to a resonance point of a second frequency (e.g., 127kHz) specified by the second electronic device 101.

According to an embodiment, in operation 1103, the first electronic device 103 may wirelessly receive power from the second electronic device 101 through the power receiving circuit 220 set to the first connection state.

According to an embodiment, in operation 1105, it may be identified whether the first voltage VRECT applied to the regulator 242 is greater than a first threshold.

According to an embodiment, when identifying that the first voltage VRECT applied to the regulator 242 is less than or equal to the first threshold (no in operation 1105), the first electronic device 103 may wirelessly receive power from the second electronic device 101 through the power receiving circuit 220 set to the first connection state, and identify periodically or in real time whether the first voltage VRECT applied to the regulator 242 is greater than the first threshold.

According to an embodiment, when identifying that the first voltage VRECT applied to the regulator 242 is greater than the first threshold (yes in operation 1105), in operation 1107, the first electronic device 103 may change the plurality of capacitors 223 and 224 and the plurality of coils 221 and 222 included in the power receiving circuit 220 from the first connection state to a second connection state by turning off the third switch S3. That is, the first electronic device 103 may control the third switch S3 to be in off state, in the second connected state. Based on turning off the third switch S3, coupling of the first coil 221 may be reduced. As the coupling of the first coil 221 in the power receiving circuit 220 is reduced, the first electronic device 103 may reduce a voltage induced in the first coil 221 by electromagnetic induction.

According to an embodiment, in operation 1109, the first electronic device 103 may perform a freewheeling operation by turning off the transistors Q1 and Q4 disposed on the high side and turning on the transistors Q2 and Q3 disposed on the low side among the plurality of transistors Q1, Q2, Q3, and Q4 included in the rectification circuit 255. As the freewheeling operation is performed, the first electronic device 103 may consume power received from the second electronic device 101. At this time, as the voltage induced in the first coil 221 is reduced, a current with a magnitude less than that of an allowed current may be conducted in the transistors Q2 and Q3 disposed on the low side.

According to an embodiment, in operation 1111, the first electronic device 103 may identify whether the first voltage VRECT applied to the regulator 242 is less than a second threshold, after performing the freewheeling operation. For example, the first electronic device 103 may identify periodically or in real time whether the first voltage VRECT applied to the regulator 242 is less than the second threshold, after performing the freewheeling operation.

According to an embodiment, when identifying that the first voltage VRECT is less than the second threshold (yes in operation 1111), the first electronic device 103 may perform a rectification operation on the power received from the second electronic device 101 by controlling on/off of the plurality of transistors Q1, Q2, Q3, and Q4, in operation 1113.

According to an embodiment, in operation 1115, the first electronic device 103 may reset (or change) the plurality of capacitors 223 and 224 and the plurality of coils 221 and 222 to the previous first connection state by turning on the third switch S3. For example, the first electronic device 103 may control the third switch S3 back to the on state. Thereafter, the first electronic device 103 may wirelessly receive power from the second electronic device 101 through the power receiving circuit 220 set to the first connection state.

Depending on implementation, the order of the operations described with reference to FIG. 11 may be changed, or two or more operations may be performed in parallel.

The connection states of the plurality of capacitors 223 and 224 and the plurality of coils 221 and 222 described above with reference to FIGS. 9 to 11 are merely examples, to which the disclosure may not be limited. For example, in view of the nature of electromagnetic induction, an impedance value based on a capacitance value may vary depending on the operating frequency of the second electronic device 101, the coil structures of the first electronic device 103 and the second electronic device 101, and a coupling state between the first electronic device 103 and the second electronic device 101. For example, the on/off control of the plurality of switches S1, S2, and S3 included in the power receiving circuit 220 may be performed differently from the above. For example, when the resonance point is set to the right of 400nF in the graph 710 of FIG. 7, the impedance magnitude may increase as the equivalent capacitance increases. At this time, the first electronic device 103 may control on/off of the first switch S1 and the second switch S2 differently from the description given with reference to FIGS. 9 to 11 in order to increase the impedance of the power receiving circuit 220.

The first electronic device 103 according to an embodiment may be implemented identically or similarly to an electronic device 1201 described below.

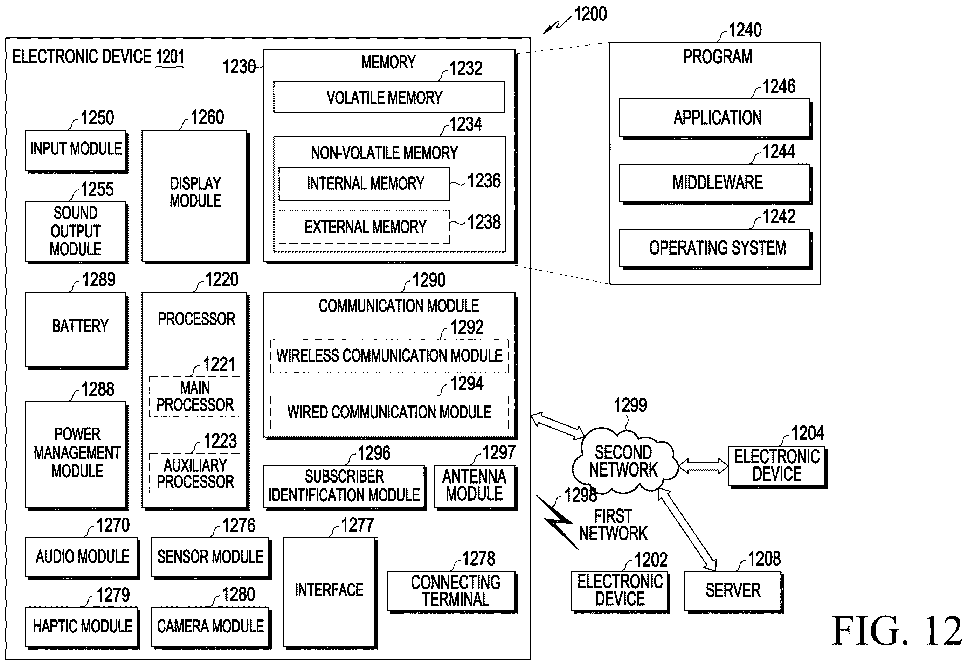

FIG. 12 is a block diagram illustrating an electronic device 1201 in a network environment 1200 according to various embodiments. Referring to FIG. 12, the electronic device 1201 (e.g., the wireless power reception device 103 in FIG. 1 or the first electronic device 103 in FIG. 2) in the network environment 1200 may communicate with an electronic device 1202 via a first network 1298 (e.g., a short-range wireless communication network), or at least one of an electronic device 1204 or a server 1208 via a second network 1299 (e.g., a long-range wireless communication network). According to an embodiment, the electronic device 1201 may communicate with the electronic device 1204 via the server 1208. According to an embodiment, the electronic device 1201 may include a processor 1220, memory 1230, an input module 1250, a sound output module 1255, a display module 1260, an audio module 1270, a sensor module 1276, an interface 1277, a connecting terminal 1278, a haptic module 1279, a camera module 1280, a power management module 1288, a battery 1289, a communication module 1290, a subscriber identification module (SIM) 1296, or an antenna module 1297. In various embodiments, at least one of the components (e.g., the connecting terminal 1278) may be omitted from the electronic device 1201, or one or more other components may be added in the electronic device 1201. In various embodiments, some of the components (e.g., the sensor module 1276, the camera module 1280, or the antenna module 1297) may be implemented as a single component (e.g., the display module 1260).

The processor 1220 may execute, for example, software (e.g., a program 1240) to control at least one other component (e.g., a hardware or software component) of the electronic device 1201 coupled with the processor 1220, and may perform various data processing or computation. According to an embodiment, as at least part of the data processing or computation, the processor 1220 may store a command or data received from another component (e.g., the sensor module 1276 or the communication module 1290) in volatile memory 1232, process the command or the data stored in the volatile memory 1232, and store resulting data in non-volatile memory 1234. According to an embodiment, the processor 1220 may include a main processor 1221 (e.g., a central processing unit (CPU) or an application processor (AP)), or an auxiliary processor 1223 (e.g., a graphics processing unit (GPU), a neural processing unit (NPU), an image signal processor (ISP), a sensor hub processor, or a communication processor (CP)) that is operable independently from, or in conjunction with, the main processor 1221. For example, when the electronic device 1201 includes the main processor 1221 and the auxiliary processor 1223, the auxiliary processor 1223 may be adapted to consume less power than the main processor 1221, or to be specific to a specified function. The auxiliary processor 1223 may be implemented as separate from, or as part of the main processor 1221.

The auxiliary processor 1223 may control at least some of functions or states related to at least one component (e.g., the display module 1260, the sensor module 1276, or the communication module 1290) among the components of the electronic device 1201, instead of the main processor 1221 while the main processor 1221 is in an inactive (e.g., sleep) state, or together with the main processor 1221 while the main processor 1221 is in an active state (e.g., executing an application). According to an embodiment, the auxiliary processor 1223 (e.g., an image signal processor or a communication processor) may be implemented as part of another component (e.g., the camera module 1280 or the communication module 1290) functionally related to the auxiliary processor 1223. According to an embodiment, the auxiliary processor 1223 (e.g., the neural processing unit) may include a hardware structure specified for artificial intelligence model processing. An artificial intelligence model may be generated by machine learning. Such learning may be performed, e.g., by the electronic device 1201 where the artificial intelligence is performed or via a separate server (e.g., the server 1208). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1230 may store various data used by at least one component (e.g., the processor 1220 or the sensor module 1276) of the electronic device 1201. The various data may include, for example, software (e.g., the program 1240) and input data or output data for a command related thereto. The memory 1230 may include the volatile memory 1232 or the non-volatile memory 1234.

The program 1240 may be stored in the memory 1230 as software, and may include, for example, an operating system (OS) 1242, middleware 1244, or an application 1246.

The input module 1250 may receive a command or data to be used by another component (e.g., the processor 1220) of the electronic device 1201, from the outside (e.g., a user) of the electronic device 1201. The input module 1250 may include, for example, a microphone, a mouse, a keyboard, a key (e.g., a button), or a digital pen (e.g., a stylus pen).

The sound output module 1255 may output sound signals to the outside of the electronic device 1201. The sound output module 1255 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1260 may visually provide information to the outside (e.g., a user) of the electronic device 1201. The display module 1260 may include, for example, a display, a hologram device, or a projector and control circuitry to control a corresponding one of the display, hologram device, and projector. According to an embodiment, the display module 1260 may include a touch sensor adapted to detect a touch, or a pressure sensor adapted to measure the intensity of force incurred by the touch.

The audio module 1270 may convert a sound into an electrical signal and vice versa. According to an embodiment, the audio module 1270 may obtain the sound via the input module 1250, or output the sound via the sound output module 1255 or a headphone of an external electronic device (e.g., an electronic device 1202) directly (e.g., wiredly) or wirelessly coupled with the electronic device 1201.

The sensor module 1276 may detect an operational state (e.g., power or temperature) of the electronic device 1201 or an environmental state (e.g., a state of a user) external to the electronic device 1201, and then generate an electrical signal or data value corresponding to the detected state. According to an embodiment, the sensor module 1276 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1277 may support one or more specified protocols to be used for the electronic device 1201 to be coupled with the external electronic device (e.g., the electronic device 1202) directly (e.g., wiredly) or wirelessly. According to an embodiment, the interface 1277 may include, for example, a high definition multimedia interface (HDMI), a universal serial bus (USB) interface, a secure digital (SD) card interface, or an audio interface.

A connecting terminal 1278 may include a connector via which the electronic device 1201 may be physically connected with the external electronic device (e.g., the electronic device 1202). According to an embodiment, the connecting terminal 1278 may include, for example, a HDMI connector, a USB connector, a SD card connector, or an audio connector (e.g., a headphone connector).

The haptic module 1279 may convert an electrical signal into a mechanical stimulus (e.g., a vibration or a movement) or electrical stimulus which may be recognized by a user via his tactile sensation or kinesthetic sensation. According to an embodiment, the haptic module 1279 may include, for example, a motor, a piezoelectric element, or an electric stimulator.

The camera module 1280 may capture a still image or moving images. According to an embodiment, the camera module 1280 may include one or more lenses, image sensors, image signal processors, or flashes.

The power management module 1288 may manage power supplied to the electronic device 1201. According to an embodiment, the power management module 1288 may be implemented as at least part of, for example, a power management integrated circuit (PMIC).

The battery 1289 may supply power to at least one component of the electronic device 1201. According to an embodiment, the battery 1289 may include, for example, a primary cell which is not rechargeable, a secondary cell which is rechargeable, or a fuel cell.

The communication module 1290 may support establishing a direct (e.g., wired) communication channel or a wireless communication channel between the electronic device 1201 and the external electronic device (e.g., the electronic device 1202, the electronic device 1204, or the server 1208) and performing communication via the established communication channel. The communication module 1290 may include one or more communication processors that are operable independently from the processor 1220 (e.g., the application processor (AP)) and supports a direct (e.g., wired) communication or a wireless communication. According to an embodiment, the communication module 1290 may include a wireless communication module 1292 (e.g., a cellular communication module, a short-range wireless communication module, or a global navigation satellite system (GNSS) communication module) or a wired communication module 1294 (e.g., a local area network (LAN) communication module or a power line communication (PLC) module). A corresponding one of these communication modules may communicate with the external electronic device via the first network 1298 (e.g., a short-range communication network, such as Bluetooth^{™}, wireless-fidelity (Wi-Fi) direct, or infrared data association (IrDA)) or the second network 1299 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1292 may identify and authenticate the electronic device 1201 in a communication network, such as the first network 1298 or the second network 1299, using subscriber information (e.g., international mobile subscriber identity (IMSI)) stored in the subscriber identification module 1296.

The wireless communication module 1292 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1292 may support a high-frequency band (e.g., the mmWave band) to achieve, e.g., a high data transmission rate. The wireless communication module 1292 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1292 may support various requirements specified in the electronic device 1201, an external electronic device (e.g., the electronic device 1204), or a network system (e.g., the second network 1299). According to an embodiment, the wireless communication module 1292 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1297 may transmit or receive a signal or power to or from the outside (e.g., the external electronic device) of the electronic device 1201. According to an embodiment, the antenna module 1297 may include an antenna including a radiating element including a conductive material or a conductive pattern formed in or on a substrate (e.g., a printed circuit board (PCB)). According to an embodiment, the antenna module 1297 may include a plurality of antennas (e.g., array antennas). In such a case, at least one antenna appropriate for a communication scheme used in the communication network, such as the first network 1298 or the second network 1299, may be selected, for example, by the communication module 1290 (e.g., the wireless communication module 1292) from the plurality of antennas. The signal or the power may then be transmitted or received between the communication module 1290 and the external electronic device via the selected at least one antenna. According to an embodiment, another component (e.g., a radio frequency integrated circuit (RFIC)) other than the radiating element may be additionally formed as part of the antenna module 1297.

According to various embodiments, the antenna module 1297 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1201 and the external electronic device 1204 via the server 1208 coupled with the second network 1299. Each of the electronic devices 1202 or 1204 may be a device of a same type as, or a different type, from the electronic device 1201. According to an embodiment, all or some of operations to be executed at the electronic device 1201 may be executed at one or more of the external electronic devices 1202, 1204, or 1208. For example, if the electronic device 1201 should perform a function or a service automatically, or in response to a request from a user or another device, the electronic device 1201, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1201. The electronic device 1201 may provide the outcome, with or without further processing of the outcome, as at least part of a reply to the request. To that end, a cloud computing, distributed computing, mobile edge computing (MEC), or client-server computing technology may be used, for example. The electronic device 1201 may provide ultra low-latency services using, e.g., distributed computing or mobile edge computing. In another embodiment, the external electronic device 1204 may include an internet-of-things (IoT) device. The server 1208 may be an intelligent server using machine learning and/or a neural network. According to an embodiment, the external electronic device 1204 or the server 1208 may be included in the second network 1299. The electronic device 1201 may be applied to intelligent services (e.g., smart home, smart city, smart car, or healthcare) based on 5G communication technology or IoT-related technology.

The first electronic device 103 configured to receive power wirelessly according to an embodiment may include the power receiving circuit 220 including the plurality of capacitors 223 and 224, the at least one coil 221 and/or 222, and at least one switch, the rectifier 255 including a plurality of transistors, and the control circuit 250. The control circuit according to an embodiment may be configured to set the plurality of capacitors and the at least one coil to a first connection state through the at least one switch, based on a frequency specified by a second electronic device transmitting power wirelessly. The control circuit according to an embodiment may be configured to receive AC power wirelessly from the second electronic device through the power receiving circuit set to the first connection state. The control circuit according to an embodiment may be configured to control the plurality of transistors included in the rectifier to rectify the power received from the second electronic device. The control circuit according to an embodiment may be configured to identify a first voltage of power rectified to DC through the rectifier. The control circuit according to an embodiment may be configured to, based on identifying that the first voltage is greater than a first threshold, set the plurality of capacitors and the at least one coil to a second connection state through the at least one switch to increase an impedance of the plurality of capacitors. The control circuit according to an embodiment may be configured to control the plurality of transistors included in the rectifier to freewheel the power received from the second electronic device.

The control circuit according to an embodiment may be configured to, based on identifying that the first voltage is less than a second threshold less than the first threshold, control the plurality of transistors included in the rectifier to rectify the power received from the second electronic device. The control circuit according to an embodiment may be configured to change a connection state of the plurality of capacitors and the at least one coil from the second connection state to the first connection state.

The control circuit according to an embodiment may be configured to change a connection state of the plurality of capacitors and the at least one coil from the second connected state to the first connected state through the at least one switch, based on identifying that the first voltage is less than the second threshold less than the first threshold. The control circuit according to an embodiment may be configured to control the plurality of transistors included in the rectifier to rectify the power received from the second electronic device.

The control circuit according to an embodiment may be configured to short a first transistor and a second transistor disposed on a low side of the plurality of transistors to a ground to freewheel the power received from the second electronic device.

According to an embodiment, a rectification operation of the rectifier may be discontinued during the freewheeling of the power received from the second electronic device.

The power receiving circuit according to an embodiment may include the first capacitor 223 and the second capacitor 224 connected in parallel to each other, the first coil 221 and the second coil 222 connected in parallel to each other, the first switch S1 connected in series to the first capacitor, the second switch S2 connected in parallel to each of the first capacitor and the second capacitor, and the third switch S3 disposed between the first coil and the second coil.

The control circuit according to an embodiment may be configured to turn on a first switch, turn off a second switch, and turn on a third switch in the first connection state. The control circuit according to an embodiment may be configured to turn off the first switch to reduce an equivalent capacitance value of the first electronic device in the second connected state.

The control circuit according to an embodiment may be configured to turn off a first switch, turn off a second switch, and turn on a third switch in the first connection state. The control circuit according to an embodiment may be configured to turn on the second switch to reduce an equivalent capacitance value of the first electronic device in the second connected state.

The control circuit according to an embodiment may be configured to turn off a first switch, turn off a second switch, and turn on a third switch in the first connection state. The control circuit according to an embodiment may be configured to turn off the third switch to reduce coupling of the first coil in the second connected state.

The control circuit according to an embodiment may be configured to identify the first voltage based on a voltage across both ends of the regulator 242 connected to an output terminal of the rectifier.

A method of operating the first electronic device 103 configured to receive power wirelessly according to an embodiment may include receiving AC power wirelessly from the second electronic device 101 through the power receiving circuit 220 included in the first electronic device. The plurality of capacitors 223 and 224 and the at least one coil 221 and/or 222 included in the power receiving circuit according to an embodiment may be set to a first connection state corresponding to a frequency specified by the second electronic device through at least one switch. The method of operating the first electronic device according to an embodiment may include controlling a plurality of transistors included in the rectifier 255 included in the first electronic device to rectify the power received from the second electronic device. The method of operating the first electronic device according to an embodiment may include identifying a first voltage of power rectified to DC through the rectifier included in the first electronic device. The method of operating the first electronic device according to an embodiment may include, based on identifying that the first voltage is greater than a first threshold, setting the plurality of capacitors and the at least one coil to a second connection state through the at least one switch to increase an impedance of the plurality of capacitors. The method of operating the first electronic device according to an embodiment may include controlling the plurality of transistors included in the rectifier to freewheel the power received from the second electronic device.

The method of operating the first electronic device according to an embodiment may further include, based on identifying that the first voltage is less than a second threshold less than the first threshold, controlling the plurality of transistors included in the rectifier to rectify the power received from the second electronic device. The method of operating the first electronic device according to an embodiment may further include changing a connection state of the plurality of capacitors and the at least one coil from the second connection state to the first connection state.

The method of operating the first electronic device according to an embodiment may further include, based on identifying that the first voltage is less than the second threshold less than the first threshold, changing a connection state of the plurality of capacitors and the at least one coil from the second connected state to the first connected state through the at least one switch. The method of operating the first electronic device according to an embodiment may further include controlling the plurality of transistors included in the rectifier to rectify the power received from the second electronic device.

Freewheeling the power received from the second electronic device according to an embodiment may include shorting a first transistor and a second transistor disposed on a low side of the plurality of transistors to a ground.

According to an embodiment, a rectification operation of the rectifier is discontinued during the freewheeling of the power received from the second electronic device.

According to an embodiment, the power receiving circuit may include the first capacitor 223 and the second capacitor 224 connected in parallel to each other, the first coil 221 and the second coil 222 connected in parallel to each other, the first switch S1 connected in series to the first capacitor, the second switch S2 connected in parallel to each of the first capacitor and the second capacitor, and the third switch S3 disposed between the first coil and the second coil.

The method of operating the first electronic device according to an embodiment may further include turning on a first switch, turning off a second switch, and turning on a third switch in the first connection state. The method of operating the first electronic device according to an embodiment may further include turning off the first switch to reduce an equivalent capacitance value of the first electronic device in the second connected state.

The method of operating the first electronic device according to an embodiment may further include turning off a first switch, turning off a second switch, and turning on a third switch in the first connection state. The method of operating the first electronic device according to an embodiment may further include turning on the second switch to reduce an equivalent capacitance value of the first electronic device in the second connected state.

The method of operating the first electronic device according to an embodiment may further include turning off a first switch, turning off a second switch, and turning on a third switch in the first connection state. The method of operating the first electronic device according to an embodiment may further include turning off the third switch to reduce coupling of the first coil in the second connected state.

The non-transitory computer-readable recording medium 1230 according to an embodiment may store instructions which, when executed, cause an electronic device to perform operations comprising: receiving AC power wirelessly from the second electronic device 101 through the power receiving circuit 220 included in the first electronic device 103, wherein the plurality of capacitors 223 and 224 and the at least one coil 221 and/or 222 included in the power receiving circuit may be set to a first connection state corresponding to a frequency specified by the second electronic device through at least one switch, controlling a plurality of transistors included in the rectifier 255 included in the first electronic device to rectify the power received from the second electronic device, identifying a first voltage of power rectified to DC through the rectifier included in the first electronic device, setting the plurality of capacitors and the at least one coil to a second connection state through the at least one switch to increase an impedance of the plurality of capacitors, based on identifying that the first voltage is greater than a first threshold, and controlling the plurality of transistors included in the rectifier to freewheel the power received from the second electronic device.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1240) including one or more instructions that are stored in a storage medium (e.g., internal memory 1236 or external memory 1238) that is readable by a machine (e.g., the electronic device 1201). For example, a processor (e.g., the processor 1220) of the machine (e.g., the electronic device 1201) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

While the disclosure has been illustrated and described with reference to various example embodiments, it will be understood that the various example embodiments are intended to be illustrative, not limiting. It will be further understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein.

## Claims

1. A first electronic device (103) configured to receive power wirelessly, comprising:
a power receiving circuit (220) including a plurality of capacitors (223, 224), at least one coil (221, 222), and at least one switch;
a rectifier (255) including a plurality of transistors; and
a control circuit (250),
wherein the control circuit is configured to:
set the plurality of capacitors and the at least one coil to a first connection state through the at least one switch, based on a frequency specified by a second electronic device (101) transmitting power wirelessly,
wirelessly receive alternating current (AC) power from the second electronic device through the power receiving circuit set to the first connection state,
control the plurality of transistors included in the rectifier to rectify the power received from the second electronic device,
identify a first voltage of power rectified to direct current (DC) through the rectifier,
based on identifying that the first voltage is greater than a first threshold, set the plurality of capacitors and the at least one coil to a second connection state through the at least one switch to increase an impedance of the plurality of capacitors and/or change a resonant frequency of the power, and control the plurality of transistors included in the rectifier to freewheel the power received from the second electronic device.

2. The electronic device of claim 1, wherein the control circuit is configured to:
based on identifying that the first voltage is less than a second threshold less than the first threshold, control the plurality of transistors included in the rectifier to rectify the power received from the second electronic device, and
change a connection state of the plurality of capacitors and the at least one coil from the second connection state to the first connection state.

3. The electronic device of either one of claims 1 and 2, wherein the control circuit is configured to:
change a connection state of the plurality of capacitors and the at least one coil from the second connected state to the first connected state through the at least one switch, based on identifying that the first voltage is less than the second threshold less than the first threshold, and
control the plurality of transistors included in the rectifier to rectify the power received from the second electronic device.

4. The electronic device of any one of claims 1 to 3, wherein the control circuit is configured to short a first transistor and a second transistor disposed on a low side of the plurality of transistors to a ground to freewheel the power received from the second electronic device.

5. The electronic device of any one of claims 1 to 4, wherein a rectification operation of the rectifier is discontinued during the freewheeling of the power received from the second electronic device.

6. The electronic device of any one of claims 1 to 5, wherein the power receiving circuit includes:
a first capacitor (223) and a second capacitor (224) connected in parallel to each other;
a first coil (221) and a second coil (222) connected in parallel to each other;
a first switch (S1) connected in series to the first capacitor;
a second switch (S2) connected in parallel to each of the first capacitor and the second capacitor; and
a third switch (S3) disposed between the first coil and the second coil.

7. The electronic device of any one of claims 1 to 6, wherein the control circuit is configured to:
turn on a first switch, turn off a second switch, and turn on a third switch in the first connection state, and
turn off the first switch to reduce an equivalent capacitance value of the first electronic device in the second connected state.

8. The electronic device of any one of claims 1 to 7, wherein the control circuit is configured to:
turn off a first switch, turn off a second switch, and turn on a third switch in the first connection state, and
turn on the second switch to reduce an equivalent capacitance value of the first electronic device in the second connected state.

9. The electronic device of any one of claims 1 to 8, wherein the control circuit is configured to:
turn off a first switch, turn off a second switch, and turn on a third switch in the first connection state, and
turn off the third switch to reduce coupling of the first coil in the second connected state.

10. The electronic device of any one of claims 1 to 9, wherein the control circuit is configured to identify the first voltage based on a voltage across both ends of a regulator (242) connected to an output terminal of the rectifier.

11. A method of operating a first electronic device (103) configured to receive power wirelessly, the method comprising:
receiving alternating current (AC) power wirelessly from a second electronic device (101) through a power receiving circuit (220) included in the first electronic device, wherein a plurality of capacitors (223, 224) and at least one coil (221, 222) included in the power receiving circuit are set to a first connection state corresponding to a frequency specified by the second electronic device through at least one switch;
controlling a plurality of transistors included in a rectifier (255) included in the first electronic device to rectify the power received from the second electronic device;
identifying a first voltage of power rectified to direct current (DC) through the rectifier included in the first electronic device;
based on identifying that the first voltage is greater than a first threshold, setting the plurality of capacitors and the at least one coil to a second connection state through the at least one switch to increase an impedance of the plurality of capacitors; and
controlling the plurality of transistors included in the rectifier to freewheel the power received from the second electronic device.

12. The method of claim 11, further comprising:
based on identifying that the first voltage is less than a second threshold less than the first threshold, controlling the plurality of transistors included in the rectifier to rectify the power received from the second electronic device; and
changing a connection state of the plurality of capacitors and the at least one coil from the second connection state to the first connection state.

13. The method of either one of claims 11 and 12, further comprising:
based on identifying that the first voltage is less than the second threshold less than the first threshold, changing a connection state of the plurality of capacitors and the at least one coil from the second connected state to the first connected state through the at least one switch; and
controlling the plurality of transistors included in the rectifier to rectify the power received from the second electronic device.

14. The method of any one of claims 11 to 13, wherein freewheeling the power received from the second electronic device comprises shorting a first transistor and a second transistor disposed on a low side of the plurality of transistors to a ground.

15. The method of any one of claims 11 to 14, wherein a rectification operation of the rectifier is discontinued during the freewheeling of the power received from the second electronic device.
